# EUROPÄISCHE PATENTANMELDUNG

(11) **EP 3 923 031 A1**
(43) Veröffentlichungstag der Anmeldung: **15.12.2021**
(21) Anmeldenummer: 20178964.1
(22) Anmeldetag: 09.06.2020
(51) Int. Cl.: G01S 19/14, G01S 19/50, G01S 19/39, G01C 21/30, G01C 21/32, G01S 5/02

(54) **BESTIMMUNG EINER POSITION EINES FORTBEWEGUNGSMITTELS AUF EINER STRASSE**

(71) Anmelder: Elektrobit Automotive GmbH, 91058 Erlangen (DE)
(72) Erfinder: Strassenburg-Kleciak, Marek, 65824 Schwalbach a. Ts. (DE)
(74) Vertreter: Continental Corporation

(57) **Zusammenfassung**

Die vorliegende Erfindung betrifft ein Verfahren, ein Computerprogramm mit Instruktionen und eine Vorrichtung zum Bestimmen einer Position eines Fortbewegungsmittels auf einer Straße (11) in einem Straßennetz. Die Erfindung betrifft zudem eine digitale Karte zur Verwendung mit einem solchen Verfahren oder mit einer solchen Vorrichtung. In einem ersten Schritt werden Funksignale für eine Positionsbestimmung empfangen. Auf Grundlage der Funksignale wird dann eine Eigenposition für das Fortbewegungsmittel bestimmt. Die Eigenposition wird anschließend unter Verwendung einer digitalen Karte des Straßennetzes auf eine Position auf einer Straße (11) des Straßennetzes abgebildet. Dabei wird ein von der Position auf der Straße (11) abhängiger Unsicherheitskorridor (UKᵢ) berücksichtigt, der eine für die Position erwartete Empfangsqualität der Funksignale widerspiegelt.

## Beschreibung

Die vorliegende Erfindung betrifft ein Verfahren, ein Computerprogramm mit Instruktionen und eine Vorrichtung zum Bestimmen einer Position eines Fortbewegungsmittels auf einer Straße in einem Straßennetz. Die Erfindung betrifft zudem eine digitale Karte zur Verwendung mit einem solchen Verfahren oder mit einer solchen Vorrichtung.

Die Routenführung durch Navigationsgeräte basiert auf einem Netzwerk von Vektoren, die als Straßen verschiedener Kategorien gekennzeichnet sind. Die Eigenposition eines Fortbewegungsmittels bzw. allgemeiner eines mobilen Navigationsgeräts wird in der Regal aus Satellitensignalen berechnet. Beispiele für Satellitennavigationssysteme sind GPS (Global Positioning System; Globales Positionsbestimmungssystem), GLONASS (Global Navigation Satellite System; Globales Satellitennavigationssystem) oder Galileo. Allerdings ist grundsätzlich auch eine Positionsbestimmung anhand von Funksignalen von Mobilfunkstationen, Radiostationen oder Fernsehstationen möglich.

Die auf Grundlage der Funksignale berechnete Eigenposition, die stets mit einer gewissen Ungenauigkeit behaftet ist, wird auf einen nächstliegenden Straßenvektor abgebildet bzw. gematcht. Dafür wird ein Parameter verwendet, der im Folgenden als Unsicherheitskorridor bezeichnet wird. Liegt die Eigenposition aufgrund von Störeinflüssen, z.B. durch Berge, hohe Bäume oder einem schlechten Empfang der Funksignale, außerhalb des Unsicherheitskorridors, wird beim Abbilden der Eigenposition eine sogenannte Offroad-Position angezeigt. Das heißt, der zugrundeliegende Algorithmus bildet die Eigenposition in diesem Fall nicht auf einen Straßenvektor ab, da angenommen wird, dass das Fortbewegungsmittel die Straße verlassen hat. Für die Größe des Unsicherheitskorridors kann, basierend auf Erfahrungswerten, für jedes Modell eines Navigationsgerätes ein fester Wert angesetzt werden.

In diesem Zusammenhang beschreibt US 5,774,824 ein Navigationsgerät, das einen Kartenabgleich zur Bestimmung einer Fahrtroute und des Standorts eines Fahrzeugs auf der Fahrtroute nutzt. Der Kartenabgleich betrachtet Abstände von gemessenen Positionen zu Straßen in einer Karte. Zudem werden Korrelationscharakteristiken für verschiedene in Frage kommende Straßen berechnet.

Anstelle der Verwendung eines festen Wertes für den Unsicherheitskorridor ist es bekannt, die Größe des Unsicherheitskorridors an die Straßenklasse zu koppeln. Dabei hat die höchste Straßenklasse, d.h. eine Autobahn, den breitesten Unsicherheitskorridor. Dieser Ansatz sorgt dafür, dass die Position beim Matching auf Straßen mit hoher Straßenklasse in der Regel zuverlässig ist.

Eine weitere Möglichkeit besteht darin, innerhalb und außerhalb von Ortschaften bzw. Städten unterschiedliche Werte für den Unsicherheitskorridor zu nutzen. Innerhalb einer Stadt wird der Unsicherheitskorridor sehr eng gewählt, um eine Fehlnavigation zu vermeiden, zum Beispiel in einer Altstadt mit einem engen Netzwerk von Straßen. Außerhalb der Stadt, wo das Netzwerk der Straßen erheblich weniger dicht ist, kann ein breiterer Unsicherheitskorridor verwendet werden. Zur Unterscheidung, ob eine Straße innerorts oder außerorts liegt, werden die administrativen Grenzen der Ortschaften verwendet.

Es ist eine Aufgabe der vorliegenden Erfindung, Lösungen für eine verbesserte Bestimmung einer Position eines Fortbewegungsmittels auf einer Straße in einem Straßennetz bereitzustellen.

Diese Aufgabe wird durch ein Verfahren mit den Merkmalen des Anspruchs 1, durch ein Computerprogramm mit Instruktionen mit den Merkmalen des Anspruchs 7, durch eine Vorrichtung mit den Merkmalen des Anspruchs 8 und durch eine digitale Karte mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Verfahren zum Bestimmen einer Position eines Fortbewegungsmittels auf einer Straße in einem Straßennetz die Schritte:
- Empfangen von Funksignalen für eine Positionsbestimmung;
- Bestimmen einer Eigenposition für das Fortbewegungsmittel auf Grundlage der Funksignale; und
- Abbilden der Eigenposition auf eine Position auf einer Straße des Straßennetzes unter Verwendung einer digitalen Karte des Straßennetzes, wobei ein von der Position auf der Straße abhängiger Unsicherheitskorridor berücksichtigt wird, der eine für die Position erwartete Empfangsqualität der Funksignale widerspiegelt.

Gemäß einem weiteren Aspekt der Erfindung umfasst ein Computerprogramm Instruktionen, die bei Ausführung durch einen Computer den Computer zur Ausführung der folgenden Schritte zum Bestimmen einer Position eines Fortbewegungsmittels auf einer Straße in einem Straßennetz veranlassen:
- Empfangen von Funksignalen für eine Positionsbestimmung;
- Bestimmen einer Eigenposition für das Fortbewegungsmittel auf Grundlage der Funksignale; und
- Abbilden der Eigenposition auf eine Position auf einer Straße des Straßennetzes unter Verwendung einer digitalen Karte des Straßennetzes, wobei ein von der Position auf der Straße abhängiger Unsicherheitskorridor berücksichtigt wird, der eine für die Position erwartete Empfangsqualität der Funksignale widerspiegelt.

Der Begriff Computer ist dabei breit zu verstehen. Insbesondere umfasst er auch Steuergeräte, Controller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Bestimmen einer Position eines Fortbewegungsmittels auf einer Straße in einem Straßennetz auf:
- ein Empfangsmodul zum Empfangen von Funksignalen für eine Positionsbestimmung; und
- ein Positionsbestimmungsmodul zum Bestimmen einer Eigenposition für das Fortbewegungsmittel auf Grundlage der Funksignale und zum Abbilden der Eigenposition auf eine Position auf einer Straße des Straßennetzes unter Verwendung einer digitalen Karte des Straßennetzes, wobei das Positionsbestimmungsmodul eingerichtet ist, einen von der Position auf der Straße abhängigen Unsicherheitskorridor zu berücksichtigen, der eine für die Position erwartete Empfangsqualität der Funksignale widerspiegelt.

Bei der erfindungsgemäßen Lösung wird nicht pauschal zwischen innerorts und außerorts gelegenen Straßen unterschieden, es wird vielmehr betrachtet, welche Empfangsqualität bzw. welche Störeinflüsse an einer bestimmten Position zu erwarten sind. So ist beispielsweise außerorts zu erwarten, dass die Empfangsqualität innerhalb eines Waldgebietes schlechter ist als innerhalb eines landwirtschaftlich genutzten Gebietes. Daher sollte im Waldgebiet ein größerer Unsicherheitskorridor verwendet werden. Auch innerhalb einer durch die administrativen Grenzen bestimmten Ortschaft kann sich ein Waldgebiet befinden, sodass auch in diesem Bereich ein größerer Unsicherheitskorridor verwendet werden sollte. Auf diese Weise kann der zu verwendende Unsicherheitskorridor optimal an die tatsächlichen Gegebenheiten angepasst werden.

Gemäß einem Aspekt der Erfindung ist der Unsicherheitskorridor für eine Position umso größer, je schlechter die erwartete Empfangsqualität an der Position ist. Auf diese Weise kommt es deutlich seltener zu Situationen, in denen fälschlicherweise eine Offroad-Position festgestellt wird.

Gemäß einem Aspekt der Erfindung sind die Funksignale Satellitensignale oder Funksignale von Mobilfunkstationen, Radiostationen oder Fernsehstationen. Üblicherweise erfolgt eine Navigation auf Grundlage von Satellitensignalen. Allerdings ist auch eine Navigation anhand von Funksignalen von Mobilfunkstationen, Radiostationen oder Fernsehstationen möglich. In beiden Fällen kann die erfindungsgemäße Lösung vorteilhaft genutzt werden.

Gemäß einem Aspekt der Erfindung wird der Unsicherheitskorridor für die Position aus Daten der digitalen Karte ermittelt. Dementsprechend umfasst eine digitale Karte zur Verwendung mit einem erfindungsgemäßen Verfahren oder mit einer erfindungsgemäßen Vorrichtung sowohl Informationen zu Straßen in einem Straßennetz als auch Daten zur Größe von Unsicherheitskorridoren für die Straßen. Die Daten können beispielsweise Angaben zur Größe des Unsicherheitskorridors oder Informationen zu einer Flächennutzung umfassen. Wie oben bereits angeführt sind die Störeinflüsse in einer freien Landschaft deutlich geringer als z.B. in der Innenstadt oder im Wald. Dementsprechend sollten freie Flächen, wie z.B. Wiesen oder Flächen mit landwirtschaftlicher Nutzung, den schmalsten Unsicherheitskorridor haben, wohingegen Waldflächen und Innenstädte mit enger Bebauung den breitesten Unsicherheitskorridor haben sollten. Die Werte für diesen Parameter können in einem Vorverarbeitungsschritt berechnet und den Straßenvektoren als expliziter Parameter zugewiesen werden. Alternativ kann den Straßenvektoren auch lediglich die Flächennutzung der angrenzenden Flächen zugewiesen werden. In diesem Fall kann ein zugehöriger Unsicherheitskorridor vom Navigationsgerät berechnet oder aus einer Tabelle entnommen werden. Als Quelle für die benötigten Zusatzinformationen können beispielsweise existierende Navigationskarten herangezogen werden, die teilweise bereits flächendeckend Nutzungsarten der Flächen bereitstellen, ohne dass diese aber den Straßen zugeordnet wären.

Gemäß einem Aspekt der Erfindung wird der Unsicherheitskorridor für die Position aus einer gemessenen Empfangsqualität der Funksignale ermittelt. Zwar kann die Empfangsqualität auch durch Ausfälle oder Störungen einer Empfangseinheit beeinflusst sein, in der Regel ist sie aber im Wesentlichen durch die Empfangssituation am Ort des Fortbewegungsmittels bedingt. Aus der Empfangsqualität kann daher abgeleitet werden, wie groß die Störeinflüsse sind und wie breit der Unsicherheitskorridor dementsprechend gewählt werden sollte.

Vorzugsweise wird ein erfindungsgemäßes Verfahren oder eine erfindungsgemäße Vorrichtung in einem Fortbewegungsmittel eingesetzt, z.B. in einem Kraftfahrzeug. Bei dem Kraftfahrzeug kann es sich z.B. um einen Personenkraftwagen, ein Nutzfahrzeug oder ein Zweirad handeln.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Bestimmen einer Position eines Fortbewegungsmittels auf einer Straße in einem Straßennetz;
- Fig. 2: zeigt schematisch eine erste Ausführungsform einer Vorrichtung zum Bestimmen einer Position eines Fortbewegungsmittels auf einer Straße in einem Straßennetz;
- Fig. 3: zeigt schematisch eine zweite Ausführungsform einer Vorrichtung zum Bestimmen einer Position eines Fortbewegungsmittels auf einer Straße in einem Straßennetz;
- Fig. 4: zeigt schematisch ein Fortbewegungsmittel, in dem eine erfindungsgemäße Lösung realisiert ist;
- Fig. 5: zeigt schematisch einen Ausschnitt einer digitalen Karte eines Straßennetzes im ländlichen Raum;
- Fig. 6: zeigt schematisch einen Ausschnitt einer digitalen Karte eines innerstädtischen Straßennetzes;
- Fig. 7: zeigt schematisch die Abbildung einer ermittelten Eigenposition eines Fortbewegungsmittels auf eine Position auf einer Straße; und
- Fig. 8: zeigt schematisch die Verwendung positionsabhängiger Unsicherheitskorridore.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

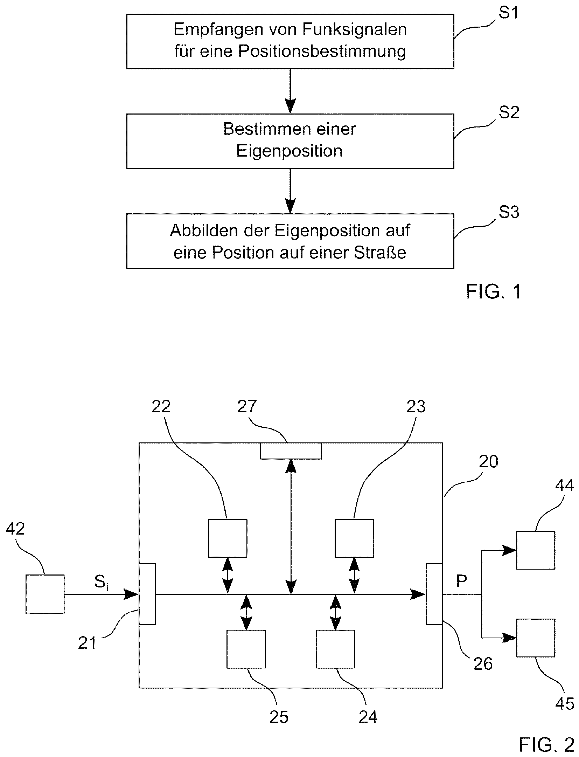

Fig. 1 zeigt schematisch ein Verfahren zum Bestimmen einer Position eines Fortbewegungsmittels auf einer Straße in einem Straßennetz. In einem ersten Schritt werden Funksignale für eine Positionsbestimmung empfangen S1, z.B. Satellitensignale oder Funksignale von Mobilfunkstationen, Radiostationen oder Fernsehstationen. Auf Grundlage der Funksignale wird dann eine Eigenposition für das Fortbewegungsmittel bestimmt S2. Die Eigenposition wird anschließend unter Verwendung einer digitalen Karte des Straßennetzes auf eine Position auf einer Straße des Straßennetzes abgebildet S3. Dabei wird ein von der Position auf der Straße abhängiger Unsicherheitskorridor berücksichtigt, der eine für die Position erwartete Empfangsqualität der Funksignale widerspiegelt. Der Unsicherheitskorridor für eine Position ist vorzugsweise umso größer, je schlechter die erwartete Empfangsqualität an der Position ist. Der Unsicherheitskorridor kann beispielsweise aus Daten der digitalen Karte ermittelt werden, z.B. aus expliziten Angaben zur Größe des Unsicherheitskorridors oder aus Informationen zu einer Flächennutzung. Alternativ kann der Unsicherheitskorridor aus einer gemessenen Empfangsqualität der Funksignale ermittelt werden.

Fig. 2 zeigt eine vereinfachte schematische Darstellung einer ersten Ausführungsform einer Vorrichtung 20 zum Bestimmen einer Position eines Fortbewegungsmittels auf einer Straße in einem Straßennetz. Die Vorrichtung 20 hat einen Eingang 21, über den ein Empfangsmodul 22 von einem Signalempfänger 42 empfangene Funksignale Sᵢ für eine Positionsbestimmung empfangen kann, z.B. Satellitensignale oder Funksignale von Mobilfunkstationen, Radiostationen oder Fernsehstationen. Ein Positionsbestimmungsmodul 23 bestimmt dann auf Grundlage der Funksignale Sᵢ eine Eigenposition für das Fortbewegungsmittel. Zudem bildet das Positionsbestimmungsmodul 23 die Eigenposition unter Verwendung einer digitalen Karte des Straßennetzes auf eine Position P auf einer Straße des Straßennetzes ab. Das Positionsbestimmungsmodul 23 ist dabei eingerichtet, einen von der Position P auf der Straße abhängigen Unsicherheitskorridor zu berücksichtigen, der eine für die Position P erwartete Empfangsqualität der Funksignale Sᵢ widerspiegelt. Der Unsicherheitskorridor für eine Position P ist vorzugsweise umso größer, je schlechter die erwartete Empfangsqualität an der Position P ist. Der Unsicherheitskorridor kann beispielsweise aus Daten der digitalen Karte ermittelt werden, z.B. aus expliziten Angaben zur Größe des Unsicherheitskorridors oder aus Informationen zu einer Flächennutzung. Alternativ kann der Unsicherheitskorridor aus einer gemessenen Empfangsqualität der Funksignale ermittelt werden. Die vom Positionsbestimmungsmodul 23 ermittelte Position P kann über einen Ausgang 26 der Vorrichtung 20 ausgegeben werden, z.B. zur Anzeige auf einem Display 44 oder zur Verwendung durch ein Assistenzsystem 45.

Das Empfangsmodul 22 und das Positionsbestimmungsmodul 23 können von einem Kontrollmodul 24 gesteuert werden. Über eine Benutzerschnittstelle 27 können gegebenenfalls Einstellungen des Empfangsmoduls 22, des Positionsbestimmungsmoduls 23 oder des Kontrollmoduls 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Das Empfangsmodul 22, das Positionsbestimmungsmodul 23 sowie das Kontrollmodul 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 26 können als getrennte Schnittstellen oder als eine kombinierte Schnittstelle implementiert sein.

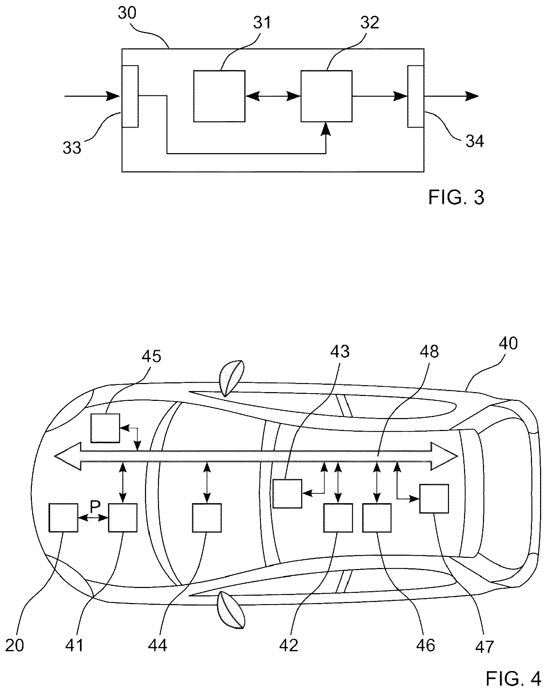

Fig. 3 zeigt eine vereinfachte schematische Darstellung einer zweiten Ausführungsform einer Vorrichtung 30 zum Bestimmen einer Position eines Fortbewegungsmittels auf einer Straße in einem Straßennetz. Die Vorrichtung 30 weist einen Prozessor 32 und einen Speicher 31 auf. Beispielsweise handelt es sich bei der Vorrichtung 30 um einen Controller oder ein eingebettetes System. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, z.B. von Funksignalen für eine Positionsbestimmung. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Fortbewegungsmittel 40, in dem eine erfindungsgemäße Lösung realisiert ist. Bei dem Fortbewegungsmittel 40 handelt es sich in diesem Beispiel um ein Kraftfahrzeug. Das Kraftfahrzeug weist eine erfindungsgemäße Vorrichtung 20 zum Bestimmen einer Position P des Fortbewegungsmittels auf. Die Vorrichtung 20 nutzt von einem Signalempfänger 42 empfangene Funksignale für die Positionsbestimmung, z.B. Satellitensignale oder Funksignale von Mobilfunkstationen, Radiostationen oder Fernsehstationen. Das Kraftfahrzeug weist zudem ein Navigationssystem 41 auf, das einen Bediener des Kraftfahrzeugs mittels einer Routenführung unterstützen kann und dazu die von der Vorrichtung 20 bestimmte Position P nutzt. Die Vorrichtung 20 kann natürlich auch in das Navigationssystem 41 integriert sein. Die Routenführung kann beispielsweise auf einem Display 44 eines Fahrerinformationssystems erfolgen. Mit einer Umfeldsensorik 43 können Daten zur Fahrzeugumgebung erfasst werden. Die Umfeldsensorik 43 kann insbesondere Sensoren zur Umfelderkennung umfassen, z.B. einen Radarsensor, einen Lidarsensor, einen Laserscanner, einen Ultraschallsensor oder eine Kamera. Weitere Bestandteile des Kraftfahrzeugs sind in diesem Beispiel ein Assistenzsystem 45, das ebenfalls die von der Vorrichtung 20 bestimmte Position P nutzen kann, sowie eine Datenübertragungseinheit 46. Mittels der Datenübertragungseinheit 46 kann eine Verbindung zu einem Backend aufgebaut werden, z.B. um aktualisierte Software für die Komponenten des Kraftfahrzeugs oder eine aktualisierte digitale Karte für das Navigationssystem 41 zu beziehen. Zur Speicherung von Daten ist ein Speicher 47 vorhanden. Der Datenaustausch zwischen den verschiedenen Komponenten des Kraftfahrzeugs erfolgt über ein Netzwerk 48.

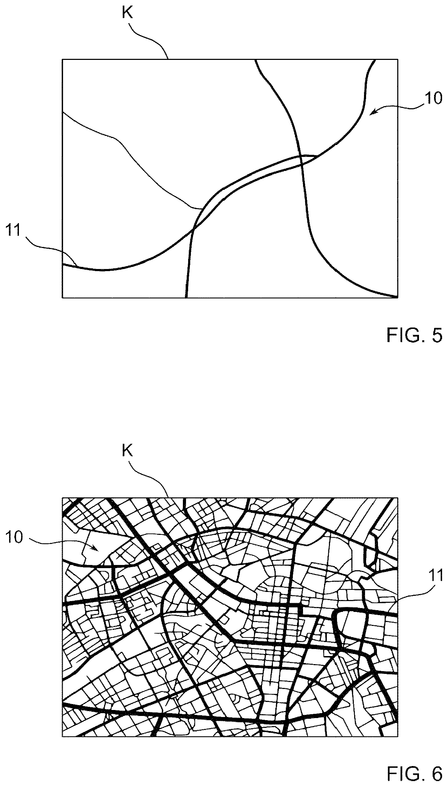

Fig. 5 zeigt schematisch einen Ausschnitt einer digitalen Karte K eines Straßennetzes 10 im ländlichen Raum. Da die Anzahl bzw. Dichte der Straßen 11 gering ist, ist es selbst bei Verwendung breiter Unsicherheitskorridore in der Regel unwahrscheinlich, dass ein Fortbewegungsmittel im Rahmen der Positionsbestimmung auf einer falschen Straße 11 verortet wird. Allerdings sind im zentralen Bereich von Fig. 5 zwei Straßen 11 zu sehen, die relativ eng benachbart sind. Hier kann es schnell zu einer fehlerhaften Verortung eines Fortbewegungsmittels kommen, wenn eine für das Fortbewegungsmittel ermittelte Eigenposition innerhalb der Unsicherheitskorridore beider Straßen 11 liegt.

Fig. 6 zeigt schematisch einen Ausschnitt einer digitalen Karte K eines innerstädtischen Straßennetzes 10. Da die Anzahl bzw. Dichte der Straßen 11 hoch ist, müssen sehr schmale Unsicherheitskorridore verwendet werden, damit ein Fortbewegungsmittel im Rahmen der Positionsbestimmung nicht auf einer falschen Straße 11 verortet wird.

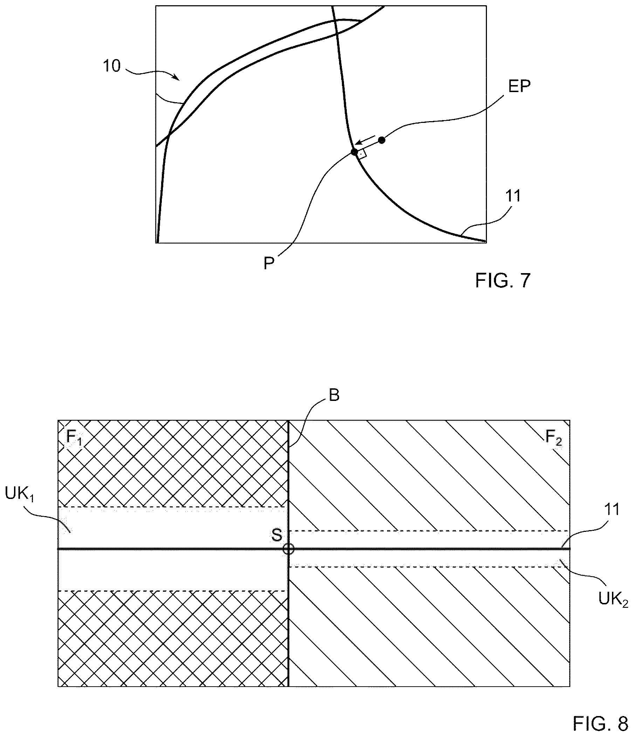

Fig. 7 zeigt schematisch die Abbildung einer ermittelten Eigenposition EP eines Fortbewegungsmittels auf eine Position P auf einer Straße 11. Zu sehen ist ein vergrößerter Ausschnitt des bereits in Fig. 5 dargestellten Straßennetzes 10. Mittels einer Positionsbestimmung auf Grundlage von Funksignalen wurde für das Fortbewegungsmittel eine Eigenposition EP ermittelt, die auf keiner der Straßen 11 des Straßennetzes 10 liegt. Da die berechnete Eigenposition EP mit einer gewissen Ungenauigkeit behaftet ist und üblicherweise angenommen werden kann, dass sich das Fortbewegungsmittel auf einer Straße 11 befindet, wird die Eigenposition EP auf eine der vorhandenen Straßen 11 abgebildet, um so die wahrscheinliche Position P des Fortbewegungsmittels zu bestimmen. Im einfachsten Fall, wie dies in Fig. 7 dargestellt ist, wird die Eigenposition EP auf die in kürzester Distanz befindliche Straße 11 abgebildet, sofern sich die Eigenposition EP innerhalb des zugehörigen Unsicherheitskorridors befindet. Liegt die Eigenposition EP aufgrund von Störeinflüssen außerhalb des Unsicherheitskorridors, wird beim Abbilden der Eigenposition EP stattdessen eine Offroad-Position angezeigt.

Fig. 8 zeigt schematisch die Verwendung positionsabhängiger Unsicherheitskorridore UKᵢ. Zu sehen sind zwei Flächen Fᵢ mit unterschiedlicher Flächennutzung. Bei der ersten Fläche F₁ handelt es sich um ein Waldgebiet, bei der zweiten Fläche F₂ um ein Gebiet mit landwirtschaftlicher Nutzung. Die beiden Flächen Fᵢ sind durch eine Begrenzungslinie B voneinander abgegrenzt und werden von einer Straße 11 durchquert. Der Straße 11 ist für jede der Flächen Fᵢ ein Unsicherheitskorridor UKᵢ zugeordnet. Für die Zuordnung der Unsicherheitskorridore UKᵢ können die Straßenvektoren einfach durch die Begrenzungslinie B zerschnitten werden. Am resultierenden Schnittpunkt S wechselt dann die Breite des Unsicherheitskorridors UKᵢ. Da im Waldgebiet F₁ größere Störeinflüsse als im Gebiet F₂ mit landwirtschaftlicher Nutzung und somit eine größere Ungenauigkeit der Positionsbestimmung zu erwarten sind, ist der Unsicherheitskorridor UKᵢ im Waldgebiet F₁ breiter als der Unsicherheitskorridor UK₂ im Gebiet F₂ mit landwirtschaftlicher Nutzung.

## Patentansprüche

1. Verfahren zum Bestimmen einer Position (P) eines Fortbewegungsmittels (40) auf einer Straße (11) in einem Straßennetz (10), mit den Schritten:
- Empfangen (S1) von Funksignalen (Sᵢ) für eine Positionsbestimmung;
- Bestimmen (S2) einer Eigenposition (EP) für das Fortbewegungsmittel (40) auf Grundlage der Funksignale (Sᵢ); und
- Abbilden (S3) der Eigenposition (EP) auf eine Position (P) auf einer Straße (11) des Straßennetzes (10) unter Verwendung einer digitalen Karte (K) des Straßennetzes (10), wobei ein von der Position (P) auf der Straße (11) abhängiger Unsicherheitskorridor (UKᵢ) berücksichtigt wird, der eine für die Position (P) erwartete Empfangsqualität der Funksignale (Sᵢ) widerspiegelt.

2. Verfahren gemäß Anspruch 1, wobei der Unsicherheitskorridor (UKᵢ) für eine Position (P) umso größer ist, je schlechter die erwartete Empfangsqualität an der Position (P) ist.

3. Verfahren gemäß Anspruch 1 oder 2, wobei die Funksignale (Sᵢ) Satellitensignale oder Funksignale von Mobilfunkstationen, Radiostationen oder Fernsehstationen sind.

4. Verfahren gemäß einem der vorherigen Ansprüche, wobei der Unsicherheitskorridor (UKᵢ) für die Position (P) aus Daten der digitalen Karte (K) ermittelt wird.

5. Verfahren gemäß Anspruch 4, wobei die Daten Angaben zur Größe des Unsicherheitskorridors (UKᵢ) oder Informationen zu einer Flächennutzung umfassen.

6. Verfahren gemäß einem der Ansprüche 1 bis 3, wobei der Unsicherheitskorridor (UKᵢ) für die Position (P) aus einer gemessenen Empfangsqualität der Funksignale (Sᵢ) ermittelt wird.

7. Computerprogramm mit Instruktionen, die bei Ausführung durch einen Computer den Computer zur Ausführung der Schritte eines Verfahrens gemäß einem der Ansprüche 1 bis 6 zum Bestimmen einer Position (P) eines Fortbewegungsmittels (40) auf einer Straße (11) in einem Straßennetz (10) veranlassen.

8. Vorrichtung (20) zum Bestimmen einer Position (P) eines Fortbewegungsmittels (40) auf einer Straße (11) in einem Straßennetz (10), mit:
- einem Empfangsmodul (22) zum Empfangen (S1) von Funksignalen (Sᵢ) für eine Positionsbestimmung; und
- einem Positionsbestimmungsmodul (23) zum Bestimmen (S2) einer Eigenposition (EP) für das Fortbewegungsmittel (40) auf Grundlage der Funksignale (Sᵢ) und zum Abbilden (S3) der Eigenposition (EP) auf eine Position (P) auf einer Straße (11) des Straßennetzes (10) unter Verwendung einer digitalen Karte (K) des Straßennetzes (10), wobei das Positionsbestimmungsmodul (23) eingerichtet ist, einen von der Position (P) auf der Straße (11) abhängigen Unsicherheitskorridor (UKᵢ) zu berücksichtigen, der eine für die Position (P) erwartete Empfangsqualität der Funksignale (Sᵢ) widerspiegelt.

9. Digitale Karte (K) zur Verwendung mit einem Verfahren gemäß einem der Ansprüche 1 bis 6 oder mit einer Vorrichtung gemäß Anspruch 8, mit Informationen zu Straßen (11) in einem Straßennetz (10) und Daten zur Größe von Unsicherheitskorridoren (UKᵢ) für die Straßen (11).
